(19) Europäisches Patentamt
European Patent Office
Office européen des brevets

(11) Publication number: 0 553 439 A1

# (12) EUROPEAN PATENT APPLICATION

(21) Application number: 92120652.0

(51) Int. Cl.[5]: C08L 81/02, C08L 71/12

(22) Date of filing: 03.12.92

(30) Priority: 20.01.92 JP 7222/92

(43) Date of publication of application:
04.08.93 Bulletin 93/31

(84) Designated Contracting States:
DE FR GB IT NL

(71) Applicant: MITSUBISHI PETROCHEMICAL CO., LTD.
5-2, 2-chome, Marunouchi
Chiyoda-ku Tokyo 100(JP)

(72) Inventor: Ohmura, Haruo, c/o Mitsubishi Petroch. Co.,Ltd.
1, Toho-cho
Yokkaichi-shi, Mie(JP)
Inventor: Tanaka, Tomohiko, c/o Mitsubishi Petroch. Co.,Ltd.
1, Toho-cho
Yokkaichi-shi, Mie(JP)

(74) Representative: Hansen, Bernd, Dr. Dipl.-Chem. et al
Hoffmann, Eitle & Partner Patent- und Rechtsanwälte Arabellastrasse 4 Postfach 81 04 20
W-8000 München 81 (DE)

## (54) Thermoplastic resin composition.

(57) A thermoplastic resin composition comprising (a) from 10 to 90% by weight of polyphenylene sulfide, (b) from 10 to 90% by weight of hydroxyalkylated polyphenylene ether, and (c) from 0.01 to 10 parts by weight, per 100 parts by weight of the total of (a) and (b), of a coupling agent containing, per molecule, at least one group selected from the group consisting of an amino group, an epoxy group, a mercapto group, a halogen atom, an isocyanato group, and a ureido group and at least one structure selected from the group consisting of Si-O-C, Si-OH, Si-O-P, Si-NH, Si-N-C, Si-N=C, Si-Cℓ, Si-Br, and Si-I. The composition exhibits improved compatibility between components (a) and (b) and provides molded articles having excellent impact strength, excellent rigidity, and good appearance as well as the characteristics inherent to polyphenylene sulfide and polyphenylene ether.

EP 0 553 439 A1

## FIELD OF THE INVENTION

This invention relates to a resin composition comprising polyphenylene sulfide and hydroxyalkylated polyphenylene ether, and more particularly to a thermoplastic resin composition which provides molded articles with excellent mechanical strength, thermal rigidity, and appearance and which is useful as an engineering plastic for machine parts, e.g., a connector, an ignition manifold, a gear, a bumper, and a coil sealant.

## BACKGROUND OF THE INVENTION

Polyphenylene sulfide (hereinafter abbreviated as PPS) is known as a high-melting heat resistant resin with excellent fluidity, organic solvent resistance, electrical characteristics, and flame retardance. For use as a molding material, however, PPS has poor extrusion stability and poor molding stability due to the low degree of polymerization reached. Further, the glass transition temperature of PPS is about 90 °C, which is not very high. As a result, PPS undergoes a considerable reduction in rigidity at high temperatures. Improvements in performance have been achieved by compounding PPS with inorganic fillers such as glass fiber, carbon fiber, talc, and silica. However, molded articles obtained from PPS compositions containing these types of inorganic fillers tend to suffer from deterioration of appearance or warpage.

On the other hand, polyphenylene ether (hereinafter abbreviated as PPE) is recognized as an engineering plastic with excellent heat resistance, dimensional stability, non-hygroscopicity, and electrical characteristics. However, PPE has poor moldability due to its low melt-flow characteristics and also has insufficient oil resistance and insufficient impact resistance.

Hence, various polymer blends containing PPS or PPE have hitherto been proposed in an attempt to provide a molding material in which the above-described drawbacks are compensated for while retaining their own advantages.

For example, blending PPE and PPS to improve moldability of PPE has been suggested as disclosed in JP-A-50-156561 (the term "JP-A" as used herein means an "unexamined published Japanese patent application"). Such a mere polymer blend, though exhibiting improved moldability, has poor affinity at the interface between the PPE and the PPS because these two resins are essentially incompatible with each other. As a result, the composition undergoes phase separation (delamination) on molding, failing to provide molded articles having satisfactory mechanical strength.

In order to overcome the above-described problem of incompatibility between PPS and PPE, several proposals have been made to date. For instance, JP-A-59-164360 (U.S. Patent 4,528,346) and JP-A-59-213758 suggest compounding an epoxy resin with a PPS/PPE blend, and JP-A-2-86652 (EP-A-360544) and JP-A-1-213361 teach compounding an epoxy-containing styrene polymer with a PPS/PPE blend. It has also been proposed to modify PPE by introducing various functional groups to provide improved compatibility with PPS. For example, JP-A-64-36645 and JP-A-2-36261 (EP-A-341422) disclose PPE modified with a compound having an ethylenically unsaturated bond and an acid anhydride group in the same molecule, more specifically maleic anhydride-modified PPE. However, these resin compositions are still unsatisfactory in terms of mechanical properties of the resulting molded articles.

Another approach for improving mechanical strength of a PPS/PPE blend is to compound a coupling agent into the blend as disclosed in JP-A-3-79661 or Canadian Patent Application 2002477A. Similarly, compounding of a coupling agent and maleic anhydride was attempted for improvement of mechanical strength as disclosed in JP-A-3-54251 or EP-A-368413. However, these resin compositions still have insufficient mechanical strength and poor compatibility.

## SUMMARY OF THE INVENTION

An object of the present invention is to provide a homogeneous thermoplastic resin composition comprising PPS, hydroxyalkylated PPE having extremely high compatibility to PPS, and a coupling agent, which composition provides molded articles that are excellent in appearance and mechanical strength.

The present invention relates to a thermoplastic resin composition comprising

(a) from 10 to 90% by weight of PPS,

(b) from 10 to 90% by weight of hydroxyalkylated PPE, and

(c) from 0.01 to 10 parts by weight, per 100 parts by weight of the total of (a) and (b), of a coupling agent containing, per molecule, at least one group selected from the group consisting of an amino group, an epoxy group, a mercapto group, a halogen atom, an isocyanato group, and a ureido group and at least one structure selected from the group consisting of Si-O-C, Si-OH, Si-O-P, Si-NH, Si-N-C, Si-N=C,

Si-Cℓ, Si-Br, and Si-I.

## DETAILED DESCRIPTION OF THE INVENTION

PPS which can be used as component (a) is a crystalline resin mainly comprising a repeating unit represented by formula:

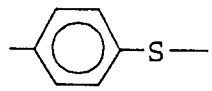

From the standpoint of physical properties such as heat resistance, component (a) to be used preferably includes a homopolymer of the above-described repeating unit and a copolymer containing the repeating unit in a molar ratio of at least 80 mol%, and more preferably at least 90 mol%. In the case where component (a) is a copolymer, the comonomer unit other than the above-described unit which is present in a molar ratio of, e.g., up to 20 mol%, includes the following copolymerizable repeating units.

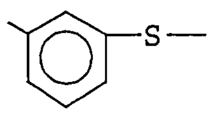

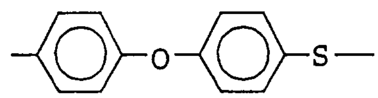

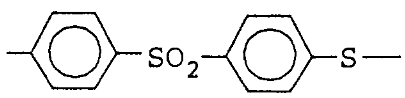

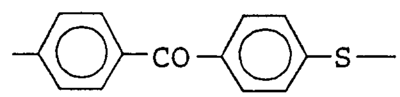

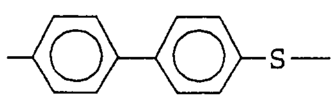

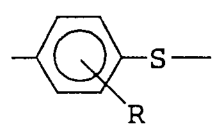

wherein R represents an alkyl group having from 1 to 8 carbon atoms, a phenyl group, or an alkoxy group.

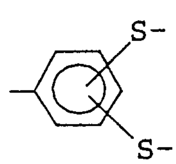

From the standpoint of physical properties of molded articles, PPS preferably has a substantially linear structure. As long as the physical properties of molded articles are not substantially impaired, PPS containing a crosslinked structure, such as polymerization-crosslinked products prepared by conducting polymerization in the presence of an effective amount of a crosslinking agent (e.g., a trihalobenzene) and thermally crosslinked products prepared by heat treating a polymer in the presence of, e.g., oxygen, can also be employed.

PPS preferably has a melt viscosity at 300 °C of from 100 to 100,000 poise, more preferably from 500 to 50,000 poise, and most preferably from 500 to 20,000 poise. If the melt viscosity is out of this range, too high or too low fluidity makes molding difficult.

PPS can be prepared by any process as long as the produced PPS meets the purposes of the present invention. In particular, PPS satisfying the above-described preferred criteria can be prepared in accordance with the process described in JP-B-45-3368 in which polymers of relatively low molecular weight are produced, the process disclosed in JP-B-52-12240 in which linear polymers of relatively high molecular weight are produced, a process in which a low-molecular weight polymer is heated in the presence of oxygen to obtain a crosslinked polymer, or any of such processes with necessary modifications.

Hydroxyalkylated PPE which can be used as component (b) is PPE obtained by adding an alcoholic hydroxyl group to the terminal phenolic hydroxyl group by reaction with a functionalizing agent. Hydroxyalkylated PPE (b) can be obtained by known processes including, for example, the process previously proposed by some of the inventors of the present invention which comprises reacting PPE with a functionalizing agent at a temperature of from 50° to 200 °C in the presence of a basic catalyst with or without an organic solvent capable of dissolving PPE.

The starting PPE is a homo- or copolymer having a repeating unit represented by formula (II):

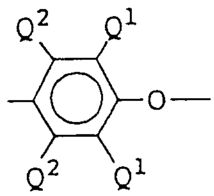

(II)

wherein $Q^1$ represents a halogen atom, a primary or secondary alkyl group, a phenyl group, an aminoalkyl group, a hydrocarbon oxy group, or a halo-hydrocarbon oxy group; and $Q^2$ represents a hydrogen atom, a halogen atom, a primary or secondary alkyl group, or a halo-hydrocarbon oxy group.

Examples of suitable primary alkyl groups as represented by $Q^1$ or $Q^2$ are methyl, ethyl, n-propyl, n-butyl, n-amyl, isoamyl, 2-methylbutyl, 2,3-dimethylbutyl, 2-, 3- or 4-methylpentyl, and heptyl groups. Examples of suitable secondary alkyl groups as $Q^1$ or $Q^2$ are isopropyl, sec-butyl, and 1-ethylpropyl groups. $Q^1$ is in most cases an alkyl group or a phenyl group and, particularly, an alkyl group having from 1 to 4 carbon atoms. $Q^2$ is in most cases a hydrogen atom.

Suitable PPE homopolymers include a homopolymer comprising a 2,6-dimethyl-1,4-phenylene ether unit. Suitable phenylene ether copolymers include a random copolymer of 2,6-dimethyl-1,4-phenylene ether units and 2,3,6-trimethyl-1,4-phenylene ether units. Many examples of suitable PPE homopolymers or PPE random copolymers are described in patents and the literature (e.g., U.S. Patents 3,422,062, 3,306,874, and 3,257,358). PPE containing a molecular constituting segment for improving characteristics such as molecular weight, melt viscosity and/or impact strength are also suitable.

Specific examples of PPE are poly(2,6-dimethyl-1,4-phenylene)ether, poly(2,6-diethyl-1,4-phenylene)-ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, a 2,6-dimethylphenol/2,3,6-trimethylphenol copolymer, a 2,6-dimethylphenol/2,3,6-triethylphenol copolymer, a 2,6-diethylphenol/2,3,6-trimethylphenol copolymer, a 2,6-dipropylphenol/2,3,6-trimethylphenol copolymer, styrene-grafted poly(2,6-dimethyl-1,4-phenylene)ether, and a styrene-grafted 2,6-dimethylphenol/2,3,6-trimethylphenol copolymer.

PPE to be used herein usually has a molecular weight providing an intrinsic viscosity of from about 0.2 to about 0.8 dℓ/g in chloroform at 30 °C.

PPE is generally prepared by oxidative coupling of the above-mentioned phenylene ether monomer(s). A number of catalyst systems are known for use in oxidative coupling of phenylene ether monomers. Any of the known catalysts can be used in the present invention without any particular limitation. For example, combinations of at least one heavy metal compound of copper, manganese, cobalt, etc. with various other substances can be used.

Hydroxyalkylated PPE species and functionalizing agents to be used for preparing the same are illustrated below through the description of processes (A) to (F).

Process (A) comprises reacting PPE of formula (II) with glycidol represented by formula (IIIA):

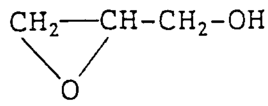

(IIIA)

to provide hydroxyalkylated PPE represented by formula (IA):

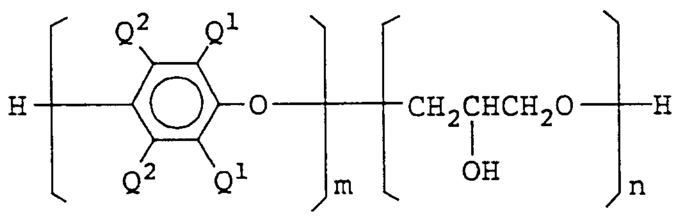

(IA)

wherein $Q^1$ and $Q^2$ are as defined above; m is a number from 10 to 50; and n is a number from 1 to 10 (refer to U.S. Patent 5,128,421).

Process (B) comprises reacting PPE of formula (II) with an epihalohydrin represented by formula (IIIB):

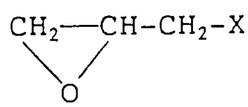

(IIIB)

wherein X represents a halogen atom,
e.g., epichlorohydrin, and hydrolyzing the resulting glycidyl-terminated PPE to provide hydroxyalkylated PPE represented by formula (IB):

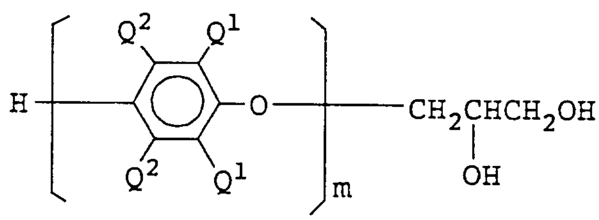

(IB)

wherein $Q^1$, $Q^2$, and m are as defined above (refer to JP-A-3-250025).

Process (C) comprises reacting PPE of formula (II) with a halogenated alkyl alcohol represented by formula (IIIC):

$X - R^1 - OH$ (IIIC)

wherein X is as defined above; and $R^1$ represents an alkylene group having from 1 to 10 carbon atoms,
e.g., 2-chloroethanol or 3-chloro-1-propanol, to provide hydroxyalkylated PPE represented by formula (IC):

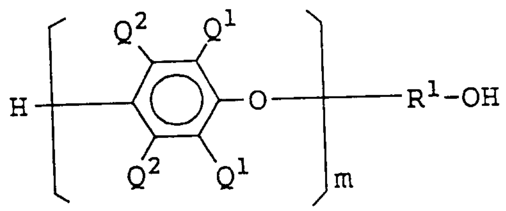

(IC)

wherein $Q^1$, $Q^2$, m, and $R^1$ are as defined above (refer to JP-A-3-292326).

Process (D) comprises reacting PPE of formula (II) with an alkylene carbonate represented by formula (IIID):

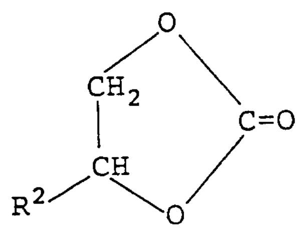

(IIID)

wherein $R^2$ represents a hydrogen atom or an alkyl group having from 1 to 8 carbon atoms, e.g., ethylene carbonate or propylene carbonate, to provide hydroxyalkylated PPE represented by formula (ID):

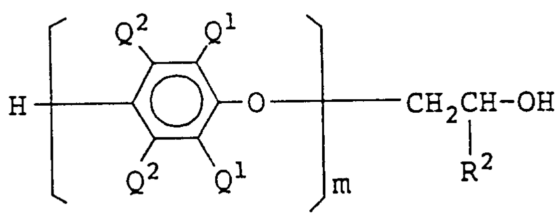

(ID)

wherein $Q^1$, $Q^2$, m, and $R^2$ are as defined above (refer to JP-A-3-250027).

Process (E) comprises reacting PPE of formula (II) with an alkylene oxide represented by formula (IIIE):

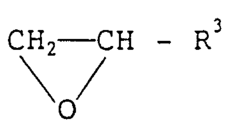

(IIIE)

wherein $R^3$ represents a hydrogen atom or an alkyl group having from 1 to 8 carbon atoms, e.g., ethylene oxide or propylene oxide, to provide hydroxyalkylated PPE represented by formula (IE):

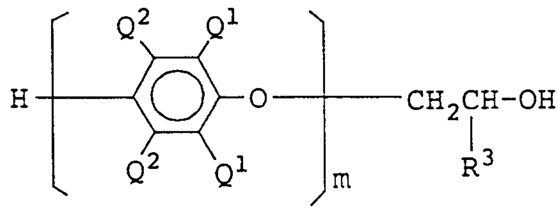

(IE)

wherein $Q^1$, $Q^2$, m, and $R^3$ are as defined above (refer to JP-A-63-128021).

Examples of suitable organic solvents which may be used here are aromatic hydrocarbons, e.g., benzene, toluene, and xylene; halogenated hydrocarbons, e.g., chloroform and carbon tetrachloride; halogenated aromatic hydrocarbons, e.g., chlorobenzene and dichlorobenzene; and heterocyclic compounds, e.g., N-methyl-2-pyrrolidone and 1,3-dimethyl-2-imidazolidinone.

Examples of suitable basic catalysts include alcoholates, e.g., sodium methoxide and sodium ethoxide; alkali metal hydroxides, e.g., sodium hydroxide and potassium hydroxide; and alkali metal carbonates, e.g., sodium carbonate and potassium carbonate.

In carrying out processes (A) to (E), the functionalizing agent is used in an amount of from 1 to 50 mols per mol of the terminal phenolic hydroxyl group of PPE. The basic catalyst is used in an amount of from 0.5 to 50 parts by weight per 100 parts by weight of PPE.

Process (F) comprises reacting 100 parts by weight of PPE of formula (II) with 0.01 to 20 parts by weight, and preferably 1 to 10 parts by weight, of a hydroxyl-containing (meth)acrylate represented by formula (IIIF):

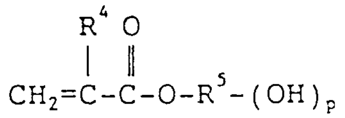

(IIIF)

wherein $R^4$ represents a hydrogen atom or a methyl group; $R^5$ represents a hydrocarbon group having 2 to 4 carbon atoms; and p represents 1 or 2,
to provide alcoholic hydroxyl-containing PPE (see JP-A-1-259069).

Process (F) is carried out in the presence of a radical initiator in the presence or absence of an organic solvent capable of dissolving PPE at a temperature of from 50° to 290°C.

Examples of suitable hydroxyl-containing (meth)acrylates of formula (IIIF) include 2-hydroxypropyl methacrylate, glycerol monomethacrylate, 2-hydroxyethyl methacrylate, 2-hydroxyethyl acrylate, 2-hydroxypropyl acrylate and 4-hydroxybutyl acrylate.

Examples of suitable radical initiators to be used in Process (F) include benzoyl peroxide, dicumyl peroxide, di-t-butylperoxide, t-butyl hydroperoxide, cumene hydroperoxide, azobisisobutyronitrile, and dicumyl.

Of the above-described hydroxyalkylated PPE species obtained by Processes (A) to (F), preferred are those of formulae (IA) and (IB) which contain two or more alcoholic hydroxyl groups differing in reaction activity and reactivity and the alcoholic hydroxyl-containing PPE species obtained by Process (F), and more preferably those of formula (IA).

If desired, hydroxyalkylated PPE may be used in combination with unmodified PPE. The mixing ratio of hydroxyalkylated PPE to unmodified PPE can be varied depending on the mixing ratio of component (b) to component (a). A suitable ratio of hydroxyalkylated PPE to unmodified PPE is usually from 100:0 to 20:80 by weight. If the proportion of hydroxyalkylated PPE is less than 20% by weight, the effect in improving compatibility is reduced.

The coupling agent which can be used in the present invention as component (c) includes silane coupling agents commonly employed as surface treating agents for various fillers or glass fiber or as primers in adhesion or coating. Examples of suitable silane coupling agents are vinyltrimethoxysilane, vinyltriethoxysilane, vinyl-tris(2-methoxyethoxy)silane, N-(2-aminoethyl)-3-aminopropylmethyldimethoxysilane, N-(2-aminoethyl)-3-aminopropyltrimethoxysilane, 3-aminopropyltriethoxysilane, 3-glycidoxypropyltrimethoxysilane, 3-glycidoxypropylmethyldimethoxysilane, 2-(3,4-epoxycyclohexyl)ethyltrimethoxysilane, 3-chloropropylmethyldimethoxysilane, 3-chloropropyltrimethoxysilane, 3-methacryloxypropyltrimethoxysilane,

3-mercaptopropyltrimethoxysilane, 3-ureidopropyltriethoxysilane, 3-isocyanatopropyltriethoxysilane, 3-chloropropylmethyldichlorosilane, 3-chloropropylmethyldiethoxysilane, methyltrimethoxysilane, methyltriethoxysilane, vinyltriacetoxysilane, hexamethyldisilazan-3-anilinopropyltrimethoxysilane, methyltrichlorosilane, dimethyldichlorosilane, and trimethylchlorosilane. Preferred of these are those having a functional group capable of reacting with an organic substance, e.g., an amino group, a vinyl group, an epoxy group, a mercapto group, a halogen atom, a ureido group, a methacryloxy group, and an isocyanate group. Specific examples of such silane coupling agents are vinyltrimethoxysilane, vinyltriethoxysilane, N-(2-aminoethyl)-3-aminopropyltrimethoxysilane, 3-aminopropyltriethoxysilane, 3-glycidoxypropyltrimethoxysilane, 3-glycidoxypropylmethyldimethoxysilane, 3-methacryloxypropyltrimethoxysilane, 3-mercaptopropyltrimethoxysilane, 3-chloropropyltrimethoxysilane, 3-ureidopropyltriethoxysilane, and 3-isocyanatopropyltriethoxysilane. More preferred are 3-glycidoxypropylmethyldimethoxysilane, 3-mercaptopropyltrimethoxysilane, and 3-aminopropyltriethoxysilane. In addition, a hydrolysis product of these coupling agents may be employed as well.

If desired, the thermoplastic resin composition comprising components (a), (b), and (c) may further contain additives, such as antioxidants, weathering agents, nucleating agents, flame retardants, plasticizers, and fluidity improving agents. Addition of organic or inorganic fillers or reinforcing materials, especially glass fiber, mica, talc, wollastonite, potassium titanate, calcium carbonate, or silica are effective to improve rigidity, heat resistance, and dimensional stability of the composition. To improve practical utility, known colorants and dispersing agents therefor can also be employed.

Furthermore, addition of an impact modifier to the resin composition provides further improvement in impact strength of the molded articles. Suitable impact modifiers include a styrene-butadiene block copolymer rubber or a hydrogenation product thereof; a styrene-butadiene-styrene block copolymer rubber or a hydrogenation product thereof; an ethylene-propylene copolymer rubber, an ethylene-propylene-diene copolymer rubber, or a modification product of these polyolefins, e.g., an $\alpha,\beta$-unsaturated carboxylic acid anhydride-modified polymer and a glycidyl ester- or unsaturated glycidyl ether-modified polymer; a copolymer comprising an unsaturated epoxy compound and ethylene; and a copolymer comprising an unsaturated epoxy compound, ethylene, and an ethylenically unsaturated compound.

These impact modifiers may be used either individually or as a combination of two or more thereof. The amount of the impact modifier to be compounded varies depending on the desired physical properties. For example, for the purpose of improving a balance between rigidity and impact strength of a molded article, it is used in an amount of from 5 to 30 parts by weight per 100 parts by weight of the total of components (a) and (b).

The thermoplastic resin composition has satisfactory compatibility between resin components (a) and (b) at any mixing ratio of (a) and (b). However, considering the balance between mechanical strength and organic solvent resistance, a mixing ratio of PPS (a) to hydroxyalkylated PPE (b) should range from 10:90 to 90:10, preferably from 20:80 to 80:20, and more preferably from 30:70 to 70:30, by weight. If component (a) is present in an amount less than 10% by weight, the composition has poor solvent resistance. If it exceeds 90% by weight, sufficient thermal rigidity cannot be obtained.

The coupling agent (c) is usually added in an amount of from 0.01 to 10 parts by weight, preferably from 0.05 to 5 parts by weight, and more preferably from 0.5 to 3 parts by weight, per 100 parts by weight of the total of components (a) and (b).

The thermoplastic resin composition of the invention can be obtained by melt-kneading the above-described components according to kneading techniques commonly employed for general thermoplastic resins. For example, powdered or granular components are uniformly dry blended, if desired, together with necessary additives in a Henschel mixer, a ribbon blender, a twin-cylinder mixer, etc., and the resulting blend is melt-kneaded in a single-screw extruder, a multi-screw extruder, a roll, a Banbury mixer, etc.

Methods of molding the thermoplastic resin composition of the invention are not particularly restricted, and any molding techniques commonly employed for thermoplastic resins, such as injection molding, blow molding, extrusion molding, sheet molding, thermoforming, rotational molding, laminate molding, and press molding, can be employed.

The present invention is now illustrated in greater detail with reference to Preparation Examples, Examples, and Comparative Examples, but it should be understood that the present invention is not deemed to be limited thereto. All the parts and percents are by weight unless otherwise indicated.

The following resin materials were used in the Examples and Comparative Examples.

PPS:

Toprene T-7 (trade name of PPS produced by Toprene Co., Ltd.)

PPE:

Poly(2,6-dimethyl-1,4-phenylene ether) produced by Nippon Polyether K.K. whose intrinsic viscosity (30 °C, chloroform) was 0.3 dℓ/g.

Impact Modifier:

1. Partially hydrogenated styrene-butadiene-styrene block copolymer ("Kraton G-1651" produced by Shell Chemical Co., Ltd.) (abbreviated as SEBS).
2. Ethylene-vinyl acetate-glycidyl methacrylate copolymer ("Bondfast BF-E" produced by Sumitomo Chemical Co., Ltd.) (abbreviated as EVG).

PREPARATION EXAMPLE 1

Hydroxyalkylated PPE (Modified PPE-1)

In 5 ℓ of toluene was completely dissolved 500 g of PPE ([η] = 0.3 dℓ/g) at 100 °C with stirring under a nitrogen atmosphere. To the resulting solution were added 75 g of sodium ethoxide as a catalyst and 500 mℓ of methanol, and 250 g of glycidol was added dropwise thereto over 30 minutes. After the stirring had been continued at 100 °C for 7 hours, the reaction mixture was poured into 25 ℓ of methanol to precipitate a hydroxyalkylated PPE produced. The precipitate was collected by filtration, washed twice with methanol, and dried at 80 °C under reduced pressure.

The resulting hydroxyalkylated PPE was designated modified PPE-1. The infrared absorption spectrum of modified PPE-1 showed an absorption assigned to a hydroxyl group in the vicinity of 3380 $cm^{-1}$. The reaction rate of the terminal phenolic hydroxyl groups of the starting PPE was found to be 90% as calculated from the terminal phenolic hydroxyl group contents before and after the reaction according to the method described in Journal of Applied Polymer Science: Applied Polymer Symposium, Vol. 34, pp. 103-117 (1978) (hereinafter the same).

PREPARATION EXAMPLE 2

Alcoholic Hydroxyl-Containing PPE (Modified PPE-2)

A hundred parts of PPE ([η] = 0.3 dℓ/g) were dry blended with 3 parts of 2-hydroxyethyl methacrylate, and the blend was kneaded in a laboratory plastomill manufactured by Toyo Seiki Seisakusho at 280 °C and 60 rpm for 5 minutes. The resulting compound was ground to granule in a mill. A 6 g portion of the granular compound was dissolved in 50 mℓ of chloroform, and the solution was poured into 400 mℓ of acetonitrile. The thus formed precipitate was collected by filtration and dried at 100 °C under reduced pressure.

The resulting alcoholic hydroxyl-containing PPE was designated Modified PPE-2. The 2-hydroxyethyl methacrylate content grafted in Modified PPE-2 was found to be 0.80% as calculated from a calibration curve prepared from the infrared absorbance at 1741 $cm^{-1}$.

PREPARATION EXAMPLE 3

Alcoholic Hydroxyl-Containing PPE (Modified PPE-3)

Alcoholic hydroxyl-containing PPE (designated Modified PPE-3) was prepared in the same manner as in Preparation Example 2, except for starting with 100 parts of PPE, 3 parts of 2-hydroxyethyl methacrylate, and 1 part of dicumyl ("Percadox 30" produced by Kayaku Akuzo K.K.). The 2-hydroxyethyl methacrylate content in Modified PPE-3 was 0.87%.

EXAMPLE 1

Fifty parts of PPS, 50 parts of Modified PPE-1 obtained in Preparation Example 1, and 3 parts of 3-aminopropyltriethoxysilane (hereinafter referred to Agent-1) were dry blended and then melt-kneaded in a laboratory plastomill (manufactured by Toyo Seiki Seisakusho) at 310 °C and 180 rpm for 5 minutes. The resulting compound was ground to granules in a mill. The granular compound was press molded at 310 °C by means of a compression molding press (manufactured by Toyo Seiki Seisakusho) to prepare a 2 mm

thick sheet. The sheet was heated in a hot air drier at 120 °C for 4 hours to cause PPS to sufficiently crystallize. The sheet was then cut to prescribed sizes to prepare test specimens for evaluation of various physical properties. Before evaluation, the specimens were preserved in a desiccator for 2 days.

PPS used above had previously been dried in vacuo at 100 °C for 24 hours before use.

Physical properties and the appearance of the specimens were measured and evaluated according to the following test methods. The results obtained are shown in Table 1.

1) Rigidity:

The specimen was subjected to a flexural rigidity test at 23 °C in accordance with JIS K7106.

2) Izod Impact Strength:

Izod impact strength at 23 °C was measured on three thicknesses of a 2 mm thick specimen fixed together by use of an Izod impact tester according to JIS K7110.

3) Dispersion State:

A cut area of the specimen was observed under a scanning electron micrograph ("S-2400" manufactured by Hitachi, Ltd.) The micrograph obtained (1000 or 5000x magnification) was analyzed with an image analyzer ("SPICCA II" manufactured by Nippon Abionics Co., Ltd.) to obtain a number-average dispersed particle diameter Dn according to equation:

$Dn = \Sigma nidi/\Sigma ni$

4) Appearance of Molded Article:

The appearance of the specimen was observed and rated "good", "medium" (poorer than "good" but still acceptable for practical use), or "bad" (having a rough surface and unsuitable for practical use).

EXAMPLES 2 AND 3

Test specimens were prepared in the same manner as in Example 1, except for replacing Agent-1 with 3-mercaptopropyltrimethoxysilane (hereinafter referred to Agent-2) or 3-glycidoxypropylmethyldimethoxysilane (hereinafter referred to Agent-3). The results of evaluation are shown in Table 1.

COMPARATIVE EXAMPLES 1 TO 3

Test specimens were prepared in the same manner as in Examples 1, 2 or 3, except for replacing Modified PPE-1 with unmodified PPE. The results of evaluation are shown in Table 1.

COMPARATIVE EXAMPLES 4 TO 6

Test specimens were prepared in the same manner as in Comparative Examples 1, 2 or 3, except for additionally compounding 3 parts of maleic anhydride. The results of evaluation are shown in Table 1.

COMPARATIVE EXAMPLE 7

Test specimens were prepared in the same manner as in Example 1, except for using 50 parts of PPS and 50 parts of PPE only.

TABLE 1

| | Example No. 1 | Example No. 2 | Example No. 3 | Comparative Example No. 1 | Comparative Example No. 2 | Comparative Example No. 3 | Comparative Example No. 4 | Comparative Example No. 5 | Comparative Example No. 6 | Comparative Example No. 7 |
|---|---|---|---|---|---|---|---|---|---|---|
| Composition (part): | | | | | | | | | | |
| PPS | 50 | 50 | 50 | 50 | 50 | 50 | 50 | 50 | 50 | 50 |
| Modified PPE-1 | 50 | 50 | 50 | - | - | - | - | - | - | - |
| Unmodified PPE | - | - | - | 50 | 50 | 50 | 50 | 50 | 50 | 50 |
| Coupling Agent: | | | | | | | | | | |
| Agent-1 | 3 | - | - | 3 | - | - | 3 | - | - | - |
| Agent-2 | - | 3 | - | - | 3 | - | - | 3 | - | - |
| Agent-3 | - | - | 3 | - | - | 3 | - | - | 3 | - |
| Maleic anhydride | - | - | - | - | - | - | 3 | 3 | 3 | - |
| Physical Properties: | | | | | | | | | | |
| Flexural rigidity (23°C) ($kgf/cm^2$) | 24500 | 25000 | 23900 | 22000 | 25100 | 24700 | 22700 | 25600 | 21800 | 25500 |
| Notched Izod Impact Strength (23°C) (kgf·cm/cm) | 2.6 | 2.7 | 2.6 | 2.1 | 2.0 | 2.0 | 2.0 | 2.1 | 2.0 | 1.7 |
| Dispersed Particle Size (μm) | 1.2 | 0.7 | 0.9 | 50< | 2.5 | 3.1 | 50< | 3.2 | 3.4 | 3.5 |
| Appearance | good | good | good | bad | medium | medium | bad | medium | medium | medium |

## EXAMPLES 4 TO 6

Test specimens were prepared in the same manner as in Examples 1, 2 or 3, except for using 70 parts of PPS, 30 parts of Modified PPE-1, and 3 parts of the corresponding silane coupling agent. The results of

evaluation are shown in Table 2 below.

EXAMPLE 7

Test specimens were prepared in the same manner as in Example 4, except for decreasing the amount of Agent-1 to 0.5 part. The results of evaluation are shown in Table 2.

EXAMPLE 8

Test specimens were prepared in the same manner as in Example 4, except for increasing the amount of Agent-1 to 5 parts. The results of evaluation are shown in Table 2.

COMPARATIVE EXAMPLE 8

Test specimens were prepared in the same manner as in Comparative Example 7, except for changing the PPS to PPE weight ratio to 70:30. The results of evaluation are shown in Table 2.

EXAMPLE 9

Test specimens were prepared in the same manner as in Example 1, except for using 30 parts of PPS, 70 parts of Modified PPE-1, and 3 parts of Agent-1. The results of evaluation are shown in Table 2.

COMPARATIVE EXAMPLE 9

Test specimens were prepared in the same manner as in Example 9, except for using 30 parts of PPS and 70 parts of PPE only. The results of evaluation are shown in Table 2.

EXAMPLE 10

Test specimens were prepared in the same manner as in Example 1, except for using 60 parts of PPS, 30 parts of Modified PPE-1, 10 parts of PPE, and 2 parts of Agent-1. The results of evaluation are shown in Table 2.

EXAMPLES 11 AND 12

Test specimens were prepared in the same manner as in Example 5, except for further compounding 9 parts of SEBS or EVG. The results of evaluation are shown in Table 2.

TABLE 2

| | Ex. 4 | Ex. 5 | Ex. 6 | Ex. 7 | Ex. 8 | Comp. Ex. 8 | Ex. 9 | Comp. Ex. 9 | Ex. 10 | Ex. 11 | Ex. 12 |
|---|---|---|---|---|---|---|---|---|---|---|---|
| Composition (part): | | | | | | | | | | | |
| PPS | 70 | 70 | 70 | 70 | 70 | 70 | 30 | 30 | 60 | 70 | 70 |
| Modified PPE-1 | 30 | 30 | 30 | 30 | 30 | - | - | - | 30 | 30 | 30 |
| Unmodified PPE | - | - | - | - | - | 30 | 70 | 70 | 10 | - | - |
| Coupling Agent: | | | | | | | | | | | |
| Agent-1 | 3 | - | - | 0.5 | 5 | - | 3 | - | 2 | - | - |
| Agent-2 | - | 3 | - | - | - | - | - | - | - | 3 | 3 |
| Agent-3 | - | - | 3 | - | - | - | - | - | - | - | - |
| SEBS | - | - | - | - | - | - | - | - | - | 9 | - |
| EVG | - | - | - | - | - | - | - | - | - | - | 9 |
| Physical Properties: | | | | | | | | | | | |
| Flexural rigidity (23°C) ($kgf/cm^2$) | 26100 | 26300 | 26300 | 26000 | 26200 | 26900 | 23200 | 23700 | 23100 | 22600 | 20300 |
| Notched Izod Impact Strength (23°C) ($kgf \cdot cm/cm^2$) | 2.6 | 2.6 | 2.6 | 2.5 | 2.5 | 1.6 | 3.0 | 1.9 | 2.5 | 7.5 | 5.6 |
| Dispersed Particle Size (μm) | 1.1 | 1.5 | 1.0 | 1.8 | 0.5 | 2.1 | 1.4 | 2.9 | 3.0 | 2.8 | 1.7 |
| Appearance | good | good | good | good | good | medium | good | medium | good | good | good |

EXAMPLE 13

Seventy parts of PPS, 30 parts of Modified PPE-2 obtained in Preparation Example 2, and 3 parts of Agent-1 were dry blended and then melt-kneaded in a laboratory plastomill manufactured by Toyo Seiki

Seisakusho at 310 ° C and 180 rpm for 5 minutes. The resulting compound was ground to granules in a mill. The granular compound was press molded at 310 ° C by means of a compression molding press manufactured by Toyo Seiki Seisakusho to prepare a 2 mm thick sheet. The sheet was heated in a hot air drier at 120 ° C for 4 hours to cause PPS to sufficiently crystallize. The sheet was then cut to prescribed sizes to prepare specimens for evaluation. The results of evaluation are shown in Table 3 below.

EXAMPLES 14 TO 23 AND COMPARATIVE EXAMPLES 10 TO 16

Test specimens were prepared in the same manner as in Example 13, except for using the components shown in Table 3. The results of evaluation are also shown in Tables 3 and 4.

TABLE 3

| | Ex. 13 | Ex. 14 | Ex. 15 | Ex. 16 | Ex. 17 | Ex. 18 | Comp. Ex. 10 | Comp. Ex. 11 | Comp. Ex. 12 |
|---|---|---|---|---|---|---|---|---|---|
| Composition (part): | | | | | | | | | |
| PPS | 70 | 70 | 70 | 70 | 70 | 70 | 70 | 70 | 70 |
| Modified PPE-2 | 30 | 30 | - | 30 | - | - | - | - | - |
| Modified PPE-3 | - | - | 30 | - | 30 | 30 | - | - | - |
| Unmodified PPE | - | - | - | - | - | - | 30 | 30 | 30 |
| Coupling Agent: | | | | | | | | | |
| Agent-1 | 3 | - | - | - | - | - | 3 | 3 | - |
| Agent-2 | - | 3 | 3 | - | 0.5 | 5 | - | - | - |
| Agent-3 | - | - | - | 3 | - | - | - | - | - |
| Maleic anhydride | - | - | - | - | - | - | - | 3 | - |
| SEBS | - | - | - | - | - | - | - | - | - |
| EVG | - | - | - | - | - | - | - | - | - |
| Physical Properties: | | | | | | | | | |
| Flexural rigidity (23°C) ($kgf/cm^2$) | 26000 | 26200 | 26300 | 26300 | 26100 | 26200 | 25800 | 25900 | 26900 |
| Izod Impact Strength (23°C): | | | | | | | | | |
| Unnotched ($kgf\cdot cm/cm^2$) | 25.4 | 24.3 | 25.6 | 25.2 | 23.4 | 26.2 | 16.3 | 17.2 | 14.7 |
| Notched ($kgf\cdot cm/cm^2$) | 2.6 | 2.6 | 2.6 | 2.6 | 2.5 | 2.5 | 2.0 | 2.1 | 1.6 |
| Dispersed Particle Size (μm) | 1.3 | 1.5 | 1.2 | 1.4 | 1.7 | 0.8 | 16 | 25 | 2.1 |
| Appearance | good | good | good | good | good | good | bad | bad | medium |

TABLE 4

| | Ex. 19 | Comp. Ex. 13 | Comp. Ex. 14 | Ex. 20 | Comp. Ex. 15 | Ex. 21 | Comp. Ex. 16 | Ex. 22 | Ex. 23 |
|---|---|---|---|---|---|---|---|---|---|
| Composition (part): | | | | | | | | | |
| PPS | 70 | 70 | 70 | 50 | 50 | 30 | 30 | 60 | 70 |
| Modified PPE-2 | - | - | - | - | - | - | - | - | - |
| Modified PPE-3 | 30 | - | - | 50 | - | 70 | - | 30 | 30 |
| Unmodified PPE | - | 30 | 30 | - | 50 | - | 70 | 10 | - |
| Coupling Agent: | | | | | | | | | |
| Agent-1 | - | - | - | - | - | - | - | - | - |
| Agent-2 | 3 | 3 | 3 | 3 | - | 2 | - | 3 | 3 |
| Agent-3 | - | - | - | - | - | - | - | - | - |
| Maleic anhydride | - | - | 3 | - | - | - | - | - | - |
| SEBS | 9 | 9 | 9 | - | - | - | - | - | - |
| EVG | - | - | - | - | - | - | - | - | 9 |
| Physical Properties: | | | | | | | | | |
| Flexural rigidity (23°C) ($kgf/cm^2$) | 22500 | 21400 | 21500 | 25000 | 25500 | 23400 | 23700 | 24500 | 20500 |
| Izod Impact Strength (23°C): | | | | | | | | | |
| Unnotched ($kgf \cdot cm/cm^2$) | 59.2 | 28.6 | 31.5 | 15.2 | 8.4 | 8.3 | 5.2 | 23.1 | 48.5 |
| Notched ($kgf \cdot cm/cm^2$) | 7.1 | 3.2 | 3.5 | 2.7 | 1.7 | 2.8 | 1.9 | 2.4 | 6.1 |
| Dispersed Particle Size (μm) | 3.1 | 8.4 | 8.9 | 0.9 | 3.5 | 1.7 | 2.9 | 3.1 | 1.9 |
| Appearance | good | good | good | good | medium | good | medium | good | good |

According to the present invention, the compatibility between PPS and hydroxyalkylated PPE can be markedly improved by compounding a coupling agent into the PPS/hydroxyalkylated PPE blend. The resin composition of the present invention thus provides a molded article having excellent appearance and greatly improved impact strength. That is, the molding articles obtained from the thermoplastic resin composition exhibit excellent impact strength and flexural rigidity as well as the excellent properties inherent in PPS and PPE.

While the invention has been described in detail and with reference to specific embodiments thereof, it will be apparent to one skilled in the art that various changes and modifications can be made therein without departing from the spirit and scope thereof.

## Claims

**1.** A thermoplastic resin composition comprising
(a) from 10 to 90% by weight of polyphenylene sulfide,
(b) from 10 to 90% by weight of hydroxyalkylated polyphenylene ether,
and
(c) from 0.01 to 10 parts by weight, per 100 parts by weight of the total of (a) and (b), of a coupling agent containing, per molecule, at least one group selected from the group consisting of an amino group, an epoxy group, a mercapto group, a halogen atom, an isocyanato group, and a ureido group and at least one structure selected from the group consisting of Si-O-C, Si-OH, Si-O-P, Si-NH, Si-N-C, Si-N=C, Si-Cℓ, Si-Br, and Si-I.

**2.** A thermoplastic resin composition as claimed in Claim 1, wherein said hydroxyalkylated polyphenylene ether (b) is a polymer represented by formula:

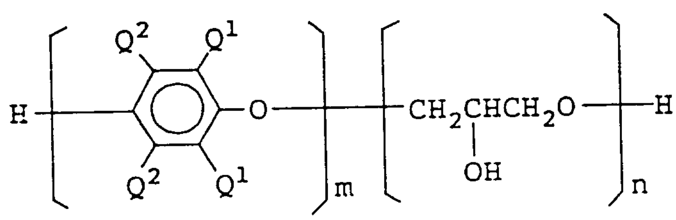

wherein $Q^1$ represents a halogen atom, a primary or secondary alkyl group, a phenyl group, an aminoalkyl group, a hydrocarbon oxy group, or a halo-hydrocarbon oxy group; $Q^2$ represents a hydrogen atom, a halogen atom, a primary or secondary alkyl group, or a halo-hydrocarbon oxy group; m is a number from 10 to 50; and n is a number from 1 to 10.

**3.** A thermoplastic resin composition as claimed in Claim 1, wherein said hydroxyalkylated polyphenylene ether (b) is an alcoholic hydroxyl-containing polyphenylene ether obtained by reacting polyphenylene ether with a hydroxyl-containing (meth)acrylate represented by formula:

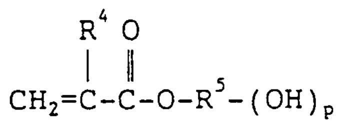

wherein $R^4$ represents a hydrogen atom or a methyl group; $R^5$ represents a hydrocarbon group having 2 to 4 carbon atoms; and p represents 1 or 2.

**4.** A thermoplastic resin composition as claimed in Claim 3, wherein said hydroxyalkylated polyphenylene ether (b) is alcoholic hydroxyl-containing polyphenylene ether obtained by reacting 2-hydroxyethyl methacrylate with poly(2,6-dimethyl-1,4-phenylene)ether.

**5.** A thermoplastic resin composition as claimed in Claim 1, wherein said coupling agent (c) is a compound selected from 3-aminopropyltriethoxysilane, 3-mercaptopropyltrimethoxysilane, and 3-glycidoxypropylmethyldimethoxysilane.

6. A thermoplastic resin composition as claimed in Claim 1, wherein said composition further comprises (d) from 5 to 30 parts by weight, per 100 parts by weight of the total of components (a) and (b), of an impact modifier.

7. A thermoplastic resin composition as claimed in Claim 6, wherein said hydroxyalkylated polyphenylene ether (b) is a polymer represented by formula:

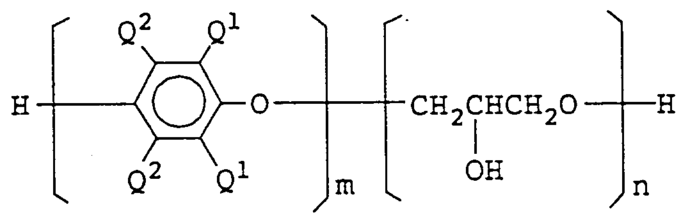

wherein $Q^1$ represents a halogen atom, a primary or secondary alkyl group, a phenyl group, an aminoalkyl group, a hydrocarbon oxy group, or a halo-hydrocarbon oxy group; $Q^2$ represents a hydrogen atom, a halogen atom, a primary or secondary alkyl group, or a halo-hydrocarbon oxy group; m is a number from 10 to 50; and n is a number from 1 to 10.

8. A thermoplastic resin composition as claimed in Claim 6, wherein said hydroxyalkylated polyphenylene ether (b) is an alcoholic hydroxyl-containing polyphenylene ether obtained by reacting polyphenylene ether with a hydroxyl-containing (meth)acrylate represented by formula:

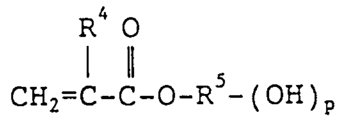

wherein $R^4$ represents a hydrogen atom or a methyl group; $R^5$ represents a hydrocarbon group having 2 to 4 carbon atoms; and p represents 1 or 2.

9. A thermoplastic resin composition as claimed in Claim 8, wherein said hydroxyalkylated polyphenylene ether (b) is alcoholic hydroxyl-containing polyphenylene ether obtained by reacting 2-hydroxyethyl methacrylate with poly(2,6-dimethyl-1,4-phenylene)ether.

10. A thermoplastic resin composition as claimed in Claim 6, wherein said coupling agent (c) is a compound selected from 3-aminopropyltriethoxysilane, 3-mercaptopropyltrimethoxysilane, and 3-glycidoxypropylmethyldimethoxysilane.

11. A thermoplastic resin composition as claimed in Claim 6, wherein said impact modifier (d) is a hydrogenated styrene-butadiene-styrene block copolymer.

European Patent Office

# EUROPEAN SEARCH REPORT

Application Number

EP 92 12 0652

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,A | EP-A-0 472 960 (MITSUBISHI PETROCHEMICAL COMPANY)<br>* claims; examples * | 1-11 | C08L81/02<br>C08L71/12 |
| D,A | EP-A-0 368 413 (GE PLASTICS JAPAN)<br>*comp. ex. 7-10*<br>* page 8, line 12 - line 25; claims 1-5,7-9,12,32-43; examples 6-8,13-16 * | 1-11 | |
| P,A | DATABASE WPIL<br>Week 9237, 11 November 1992<br>Derwent Publications Ltd., London, GB;<br>AN 92-305496<br>& JP-A-4 213 357 (ASAHI CHEM) 4 August 1992<br>* abstract * | 1-11 | |
| D,A | EP-A-0 341 422 (GENERAL ELECTRIC)<br>* page 4, line 1-5; claims 1,5 * | 1-11 | |
| A | EP-A-0 341 421 (GENERAL ELECTRIC)<br>* page 3, line 35; claims 1,3-5 * | 1 | **TECHNICAL FIELDS SEARCHED (Int. Cl.5 )**<br>C08L |

The present search report has been drawn up for all claims

| Place of search | Date of completion of the search | Examiner |
|---|---|---|
| THE HAGUE | 01 APRIL 1993 | KLIER E.K. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document